# EUROPEAN PATENT APPLICATION

(11) **EP 4 765 614 A1**
(43) Date of publication of application: **24.06.2026**
(21) Application number: 25201310.7
(22) Date of filing: 10.09.2025
(51) Int. Cl.: H02M 5/458, H02M 3/158, H02M 7/537

(54) **VOLTAGE BALANCER AND METHOD OF DRIVING THE SAME**

(30) Priority: 19.12.2024 KR 20240191204
(71) Applicant: Hanwha Solutions Corporation, Jung-gu Seoul 04541 (KR)
(72) Inventor: JO, Seung Won, Seoul 04541 (KR); SIM, Ju Young, Seoul 04541 (KR); HONG, Seok Yong, Seoul 04541 (KR); PARK, Sang Yong, Seoul 04541 (KR); YUN, Duk Hyeon, Seoul 04541 (KR)
(74) Representative: Mooser, Sebastian Thomas

(57) **Abstract**

A voltage balancer and a method of driving the same are provided. The method includes sensing a first voltage between two terminals of an inverter, a second voltage between one of the two terminals of the inverter and a neutral point located between the two terminals of the inverter, and a third voltage between the other of the two terminals of the inverter and the neutral point based on a power supply system is in an off-grid state; turning on at least one switch pair among a plurality of switches included in the voltage balancer based on the first voltage; controlling a duty ratio of each driving switch that is not turned on among the plurality of switches, based on a result of comparing the second voltage with the third voltage; and driving each driving switch based on the controlled duty ratio.

## Description

### BACKGROUND

### 1. Field

The present disclosure relates to a voltage balancer and a method of driving the same.

### 2. Description of the Related Art

Inverters may perform an off-grid function. The off-grid function may refer to a function of an inverter that generates the same voltage as a grid voltage in order to respond to a load that continuously occurs in a state where the grid voltage fails.

Some countries use two types of grid voltages, such as 240 V and 120 V. Accordingly, inverters may generate an output voltage of 240 V and an output voltage of 120 V to perform the off-grid function in response to all types of grid voltages.

A split phase inverter may divide an output voltage of 240 V into two output voltages of 120 V to respond to a 240-V grid voltage and a 120-V grid voltage. The split phase inverter may be used together with a voltage balancer to cope with load imbalance.

Load imbalance may refer to a state in which power supplied by each terminal of an inverter is not even because power consumed by a load connected to each terminal of the inverter is different. In a process of an inverter responding to load imbalance using a voltage balancer, current may flow to an inductor included in the voltage balancer, resulting in inductor loss. Therefore, a voltage balancer capable of reducing inductor loss is required.

This description of the related art is technical information which was known by the inventors for deduction of the inventive concept or acquired during the deduction, and should not be considered as having necessarily been published before the pertinent application.

### SUMMARY

The present disclosure provides a voltage balancer and a method of driving the same. The present disclosure may provide a voltage balancer having reduced inductor loss and a method of driving the voltage balancer.

The problems to be solved by the present invention are not limited to the problems mentioned above, and other problems and advantages of the present invention that are not mentioned above may be understood by the following descriptions and will be more clearly understood by embodiments of the present invention. In addition, it will be appreciated that the matters and advantages to be addressed by the present invention may be realized by the means and combinations thereof defined by the appended claims.

As a technical means for achieving the above-described technical problem, a first aspect of the present disclosure may provide a method of driving a voltage balancer. The method includes sensing a first voltage between two terminals of an inverter, a second voltage between one of the two terminals of the inverter and a neutral point located between the two terminals of the inverter, and a third voltage between the other of the two terminals of the inverter and the neutral point based on a power supply system is in an off-grid state; turning on at least one switch pair among a plurality of switches included in the voltage balancer based on the first voltage; controlling a duty ratio of each driving switch that is not turned on among the plurality of switches, based on a result of comparing the second voltage with the third voltage; and driving each driving switch based on the controlled duty ratio.

A second aspect of the present disclosure may provide a voltage balancer including a processor configured to sense a first voltage between two terminals of an inverter, a second voltage between one of the two terminals of the inverter and a neutral point located between the two terminals of the inverter, and a third voltage between the other of the two terminals of the inverter and the neutral point based on a power supply system is in an off-grid state; turn on at least one switch pair among a plurality of switches included in the voltage balancer based on the first voltage; control a duty ratio of each driving switch that is not turned on among the plurality of switches, based on a result of comparing the second voltage with the third voltage; and drive each driving switch based on the controlled duty ratio.

A third aspect of the present disclosure may provide a computer-readable recording medium having recorded thereon a program for causing the method of the first aspect of the present disclosure to be executed on a computer.

Other aspects, features, and advantages than those described above will be clear from the accompanying drawings, the claims, and the detailed description below.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is an example diagram schematically illustrating a power supply system;
FIG. 2 is a diagram illustrating a voltage balancer together with an off-grid system, according to an embodiment;
FIG. 3 is a flowchart of a method of driving a voltage balancer, according to an embodiment;
FIG. 4 is a diagram illustrating a first voltage, a second voltage, and a third voltage that may be sensed by a voltage balancer, according to an embodiment;
FIG. 5 is a diagram showing an internal circuit of a voltage balancer, according to an embodiment;
FIG. 6 is a diagram illustrating a method of performing, by a voltage balancer, voltage balancing, according to an embodiment;
FIGS. 7A and 7B are diagrams illustrating a method of performing, by a voltage balancer, voltage balancing when the first voltage is positive, according to an embodiment; and
FIGS. 8A and 8B are diagrams illustrating a method of performing, by a voltage balancer, voltage balancing when the first voltage is negative, according to an embodiment.

### DETAILED DESCRIPTION

The advantages and features of the present invention and the method for achieving them will become clear with reference to the embodiments described in detail below together with the drawings. However, the present invention is not limited to the embodiments presented below but may be implemented in various modes, and it is to be appreciated that all changes, equivalents, and substitutes that do not depart from the spirit and technical scope of the present invention are encompassed in the embodiments. The embodiments presented below are provided so that this disclosure will be complete and will fully convey the scope of the invention to one of ordinary skill in the art to which the present invention pertains. In the description of the present invention, certain detailed explanations of the related art are omitted when it is deemed that they may unnecessarily obscure the gist of the present invention.

The terms used herein are merely used to describe particular embodiments and are not intended to limit the present invention. An expression used in the singular encompasses the expression of the plural unless it has a clearly different meaning in the context. In this application, it is to be understood that terms, such as "including," "comprising," and "having" are intended to indicate the existence of features, numbers, steps, actions, components, parts, or combinations thereof disclosed in the specification and are not intended to preclude the possibility that one or more other features, numbers, steps, actions, components, parts, or combinations thereof may exist or may be added.

Some embodiments of the present disclosure may be described in terms of functional block components and various processing steps. Some or all of these functional blocks may be implemented by any number of hardware and/or software components configured to perform specific functions. For example, the functional blocks of the present disclosure may be implemented using one or more microprocessors or circuits for a given function. Also, for example, the functional blocks of the present disclosure may be implemented in various programming or scripting languages. The functional blocks may be implemented with algorithms that run on one or more processors. The present disclosure may also employ conventional techniques for electronic configuration, signal processing, and/or data processing. The terms "mechanism," "element," "unit," and "configuration" may be used in a broad sense and are not limited to mechanical and physical configurations.

Also, connection lines or connection members between the components illustrated in the drawings are merely illustrative of functional connections and/or physical or circuit connections. In actual devices, connections between the components may be represented by functional connections, physical connections, or circuit connections that may be replaced or added.

Hereinafter, the present disclosure will be described in detail with reference to the accompanying drawings.

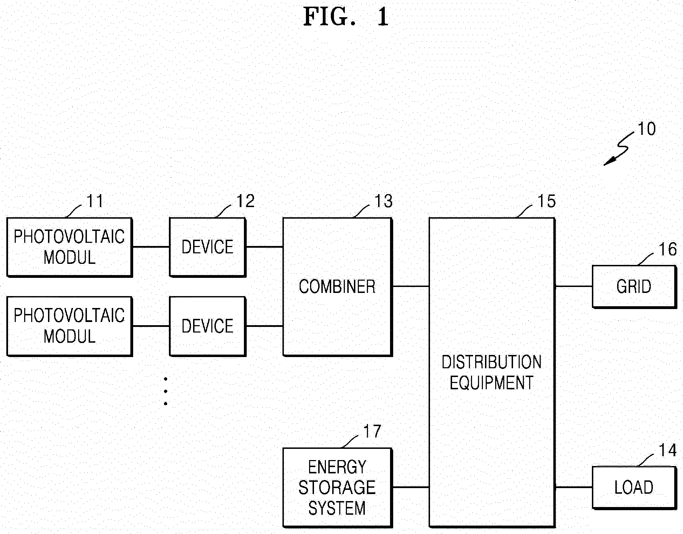

FIG. 1 is an example diagram schematically illustrating a power supply system.

Referring to FIG. 1, a power supply system 10 may include a photovoltaic module 11, a device 12, a load 14, and/or distribution equipment 15. The power supply system 10 may be connected to an external grid 16.

At least one photovoltaic module 11 may be installed on the roof or exterior wall of a building and may generate electricity. A plurality of photovoltaic modules 11 may be connected to form a photovoltaic module array.

The photovoltaic module 11 may be connected to the device 12. For example, at least one device 12 may be connected to each photovoltaic module 11. For example, when one device 12 is connected to each photovoltaic module 11, the number of devices 12 constituting the power supply system 10 may be the same as the number of photovoltaic modules 11.

A device 12 may correspond to a power conditioning system or power conversion system (PCS) that performs power conversion with respect to power generated from a photovoltaic module 11. For example, the device 12 may perform certain conversion on power generated from the photovoltaic module 11 and supply converted power to other components (e.g., the grid 16 and/or the load 14) of the power supply system 10.

In some embodiments, the device 12 may correspond to module level power electronics (MLPE). For example, the device 12 may be an optimizer or a microinverter (MI).

For example, when the device 12 is an optimizer, the device 12 may regulate power produced from the photovoltaic module 11 and output the power to an inverter (e.g., a string inverter). Current resulting from conversion (e.g., from direct current (DC) into alternating current (AC)) by the inverter may be output to the grid 16 or the load 14.

For example, when the device 12 is an MI, the device 12 may convert power generated from the photovoltaic module 11 (e.g., from DC to AC). The current converted by the device 12 may be output to the grid 16 or the load 14.

When necessary, the power supply system 10 may further include a combiner 13. At least some of the devices 12 may be connected to the distribution equipment 15 via the combiner 13. For example, power output from a plurality of devices 12 may be combined into one output by the combiner 13 and supplied to the distribution equipment 15.

The device 12 and the distribution equipment 15 may be connected to a power path that does not include the combiner 13. At least one device 12 may be connected to the distribution equipment 15 through a power path that does not include the combiner 13, and at least one other device 12 may be connected to the distribution equipment 15 via the combiner 13.

The combiner 13 may control voltage, current, and/or power output from the device 12 according to the power supply state of the photovoltaic module 11, the device 12, and/or the grid 16 and may set the operating mode thereof to a diagnosis mode, an operation mode, or the like.

In some embodiments, the combiner 13 may include an energy management system (EMS) that controls the operation of the combiner 13. The EMS may control voltage, current, and/or power, which is supplied to or output from the combiner 13, according to the power supply state of the photovoltaic module 11, the device 12, and/or the grid 16 and may set the operating mode of the combiner 13 to the diagnosis mode, the operation mode, or the like.

The load 14 may refer to an object that is installed in an electricity consumer, such as a house, a commercial facility, or a factory, and operates by receiving at least one of energy generated by the photovoltaic module 11, energy stored in an energy storage system 17, and energy supplied from the grid 16. For example, when an electricity consumer supplied with power is a house, the load 14 may include a home appliance, such as a washing machine, a refrigerator, or a television (TV).

The grid 16 may include an infrastructure system for power generation, transmission, and distribution. For example, the grid 16 may include infrastructure systems, such as a power plant, a substation, and a power line. The grid 16 may transmit electric energy generated from a power plant to the power supply system 10 or transmit surplus power generated in the power supply system 10 to the outside of the power supply system 10.

For example, commercial power transmitted from the grid 16 through a power pole may be supplied to a power consumer through a transformer. The power supply system 10 may be implemented as an off-grid system that is not connected to the grid 16.

The power supply system 10 may further include at least one energy storage system 17. When necessary, the power supply system 10 may include a plurality of energy storage systems 17. The energy storage system 17 may receive and store power generated by the photovoltaic module 11 and/or power transmitted from the grid 16. The energy storage system 17 may efficiently supply power by storing power and supplying power to the load 14 when the load 14 needs the power.

The energy storage system 17 may include a battery that stores power and a power conversion module. The battery may be equipped with a battery management system (BMS), which monitors the state of charge (SOC), the state of health (SOH), the voltage, and/or the current of the battery, diagnoses the battery, and performs a safety function, such as current blocking.

The power conversion module may correspond to a PCS that performs conversion between power of a battery and power of a part opposite the battery. For example, the PCS may perform conversion between DC of a battery and AC of an opposite part. For example, the PCS may include a bidirectional DC/DC converter, which is connected to a battery and converts voltage, and a bidirectional inverter, which connects the DC/DC converter to the outside of the energy storage system 17.

The energy storage system 17 may further include an EMS that controls the operation of the energy storage system 17. The EMS may control voltage, current, and/or power, which is supplied to or output from the energy storage system 17, according to the power supply state of a battery and/or the grid 16 and may set the operating mode of the energy storage system 17 to the diagnosis mode, the operation mode, or the like.

When necessary, an EMS coupled to a certain component of the power supply system 10 may control not only the operation of the certain component but also the operation of another component of the power supply system 10. For example, an EMS coupled to the combiner 13 or an EMS coupled to the energy storage system 17 may control the operations of both the combiner 13 and the energy storage system 17.

The distribution equipment 15 may provide electrical connection between components of the power supply system 10 and may control the power flow of the power supply system 10. For example, the distribution equipment 15 may electrically connect the photovoltaic module 11 to the load 14. For example, the distribution equipment 15 may be connected to the device 12 connected to the photovoltaic module 11 and may thus electrically connect the photovoltaic module 11 to the load 14. When necessary, the distribution equipment 15 may be further connected to at least one of the energy storage system 17 and the grid 16.

For example, the distribution equipment 15 may correspond to a distribution panel that distributes power in the power supply system 10. For example, the distribution equipment 15 may correspond to a master service panel (MSP) that distributes power generated from the photovoltaic module 11 to the load 14 or the like.

For example, the distribution equipment 15 may correspond to a main controller, which performs power distribution in the power supply system 10 and controls each device 12. For example, the main controller may include a switch, a circuit breaker, and a control unit. The switch, the circuit breaker, and the control unit may each be implemented as an independent device, or at least some of the switch, the circuit breaker, and the control unit may be included in a single device.

The main controller may include a switch that controls electrical connections between components, such as the device 12 and the load 14, which are connected to the main controller. For example, the main controller may include a relay or a power semiconductor that provides or blocks electrical connection to the device 12 and/or the energy storage system 17 according to the driving state of each component of the power supply system 10.

The main controller may perform rapid shutdown to stop the power generation of the photovoltaic module 11 in an emergency situation, such as occurrence of overcurrent in the power supply system 10. For this operation, the main controller may include a circuit breaker that blocks the connection between the device 12 and the load 14.

The main controller may include a control unit that generally controls operations of the main controller. The control unit may also control operations of a component (e.g., the device 12 or the energy storage system 17) of the power supply system 10 other than the main controller.

The control unit may control voltage, current, and/or power, which is output from or supplied to each component, according to a power supply state of the photovoltaic module 11, the device 12, the combiner 13, the load 14, the grid 16, and/or the energy storage system 17. The control unit may also set the operating mode of the main controller, the device 12, and/or the energy storage system 17 to the diagnosis mode, the operation mode, or the like.

For example, the control unit may control the photovoltaic module 11, the device 12, the combiner 13, and/or the energy storage system 17, based on a state of the power supply system 10. For example, the control unit may enable the main controller to communicate with another component (e.g., the device 12) of the power supply system 10, thereby controlling another component of the power supply system 10. Communication between the main controller and another component of the power supply system 10 may be performed using power line communication (PLC) but is not limited thereto.

For example, the control unit may control the device 12 according to the power generation state of the photovoltaic module 11. For example, the main controller may receive a control command from a server that monitors the power generation state of the photovoltaic module 11, and the control unit may control the device 12 according to the control command.

The main controller may supply power to at least some of loads 14 when power supply from the grid 16 is not smooth (e.g., in an off-grid situation). For example, when the power supply from the grid 16 is not smooth, the main controller may preferentially supply power, which is generated from the photovoltaic module 11, and/or power, which is stored in the energy storage system 17, to a backup load that has a relatively high need for a stable power supply.

The power supply system 10 may further include an auxiliary power generation device (e.g., a diesel generator), which generates power in a separate manner other than solar power generation. For example, the auxiliary power generation device may be connected to the distribution equipment 15. When a backup load may not be handled by only the photovoltaic module 11 and the energy storage system 17 due to an environmental factor, such as a time zone or weather, the main controller may supply power generated by the auxiliary power generation device to the backup load.

The control unit may be implemented by at least one processor. A processor may process a command of a computer program by performing basic arithmetic, logic, and input/output operations. Here, the command may be provided from an internal memory of the main controller or from an external device. The processor may also generally control operations of other components included in the main controller.

The processor may perform at least some of data analysis, processing, and result information generation for performing the above-described operations by using at least one of machine learning, a neural network, or a deep learning algorithm, as a rule-based or artificial intelligence algorithm. Examples of neural networks may include architecture-based models, such as a convolutional neural network (CNN), a deep neural network (DNN), and a recurrent neural network (RNN).

For example, the processor may be implemented as an array of a number of logic gates or may be implemented as a combination of a general-purpose microprocessor and a memory storing a program that may be executed on the microprocessor. For example, the processor may include a general-purpose processor, a central processing unit (CPU), a microprocessor, a digital signal processor (DSP), a controller, a microcontroller, a state machine, or the like.

In some environments, the processor may include an application-specific integrated circuit (ASIC), a programmable logic device (PLD), a field programmable gate array (FPGA), or the like. For example, the processor may refer to a combination of processing devices, such as a combination of a DSP and a microprocessor, a combination of a plurality of microprocessors, a combination of one or more microprocessors in combination with a DSP core, or a combination of any other such components.

By combining at least some of the components described above, the power supply system 10 may be implemented in various forms.

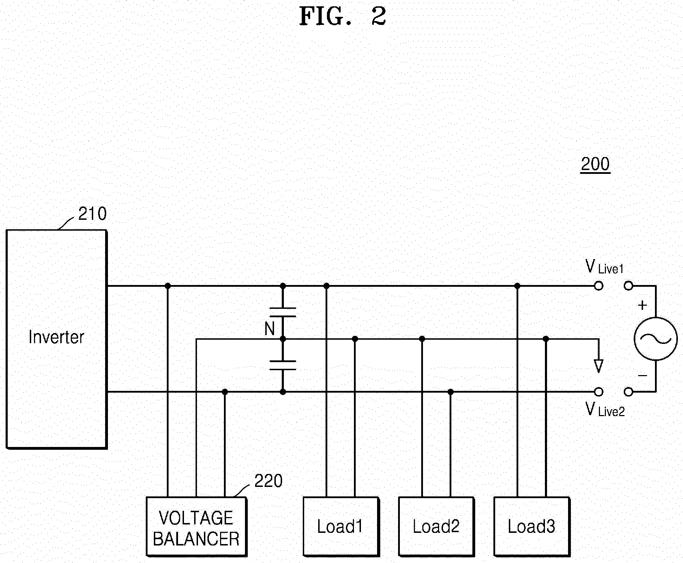

FIG. 2 is a diagram illustrating a voltage balancer together with an off-grid system, according to an embodiment.

Referring to FIG. 2, an off-grid system 200 is illustrated together with an inverter 210, a voltage balancer 220, and loads. The off-grid system 200 may refer to the power supply system 10 that is not connected to the grid 16, as described above with reference to FIG. 1.

According to the present disclosure, the voltage balancer 220 may be used in a photovoltaic system. At this time, the photovoltaic system may correspond to the power supply system 10 described with reference to FIG. 1 but is not necessarily limited thereto.

For example, the voltage balancer 220 may be used in combination with an inverter included in the energy storage system 17 in FIG. 1. In another example, the voltage balancer 220 according to an embodiment may be provided outside various devices included in the power supply system 10. However, the manner in which the voltage balancer 220 according to the present disclosure is used is not necessarily limited to what has been described above.

In the off-grid system 200, the inverter 210 may perform an off-grid function. At this time, the off-grid function may refer to a function of the inverter 210 to generate a voltage identical to a grid voltage to respond to a load that continuously occurs in the off-grid system 200.

At this time, the inverter 210 may include a grid-tied inverter. The grid-tied inverter may refer to the inverter 210 used to connect power generated from a photovoltaic system to the grid 16.

The inverter 210 may respond to a grid voltage of 240 V and a grid voltage of 120 V in the off-grid system 200. For example, the inverter 210 may respond to two types of grid voltages by using an autotransformer. For example, the autotransformer may step down a 240-V output voltage generated by an inverter to 120 V. However, the autotransformer has disadvantages of being large and expensive.

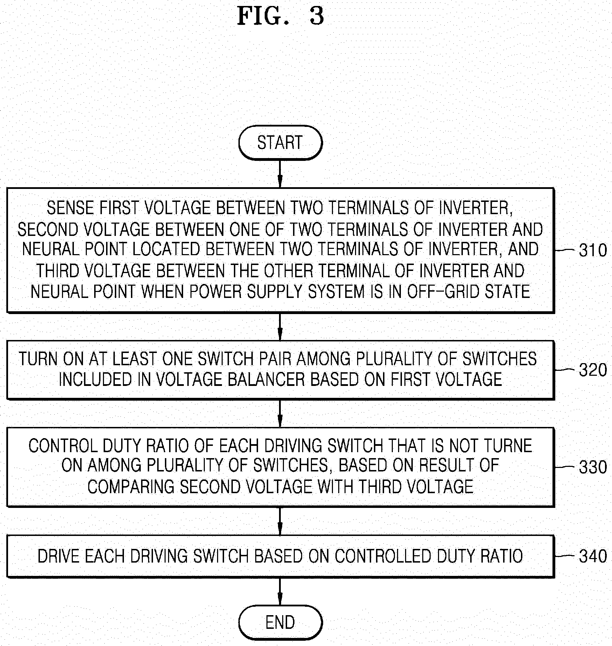

As another example, the inverter 210 may divide a 240-V output voltage into two 120-V output voltages, thereby responding to a 240-V grid voltage and a 120-V grid voltage. For example, a split phase inverter, which is a type of inverter 210, may split a 240-V output voltage into two 120-V output voltages to respond to different types of grid voltages. The inverter 210 associated with a voltage balancer according to the present disclosure, which is described with reference to FIGS. 3 to 7 below, may correspond to a split phase inverter.

As shown in FIG. 2, the inverter 210 in an off-grid state may be used together with the voltage balancer 220.

The voltage balancer 220 may refer to a device that performs voltage balancing to make power supplied from each terminal of the inverter 210 even by using an internal circuit. At this time, the voltage balancer 220 may perform voltage balancing in connection with the inverter 210. The voltage balancer 220 in FIG. 2 may correspond to a voltage balancer which is described below with reference to FIGS. 3 to 8B.

In detail, the voltage balancer 220 may be used to resolve load imbalance. Load imbalance may refer to a state in which power supplied from each terminal of the inverter 210 is unbalanced due to a difference in power consumed by a load connected to each terminal of the inverter 210. At this time, the voltage balancer 220 may achieve voltage balance by moving the unbalanced power by using an internal circuit. Voltage balance may refer to a state in which a difference in power supplied by each terminal of the inverter 210 is minimized.

The internal circuit of the voltage balancer 220 may include an element, such as an inductor or a capacitor. While the voltage balancer 220 is performing voltage balancing to resolve load imbalance, current may flow through an inductor included in the voltage balancer 220. At this time, the current flowing in the inductor may cause inductor loss.

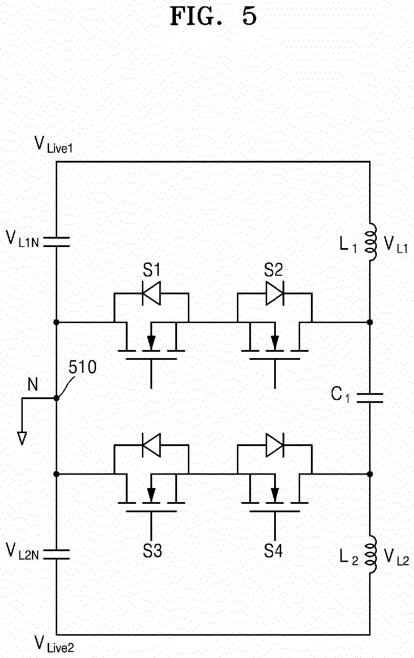

According to the present disclosure, the voltage balancer 220 may include a plurality of inductors, thereby distributing current flowing through each inductor and reducing inductor loss caused by the current. The internal circuit of the voltage balancer 220 according to an embodiment is described in detail below with reference to FIG. 5.

According to an embodiment, the voltage balancer 220 may include a processor.

The processor may control at least part of the operation of the voltage balancer 220.

For example, the processor may sense a first voltage between two terminals of the inverter 210, a second voltage between one of the two terminals of the inverter 210 and a neutral point located between the two terminals of the inverter 210, and a third voltage between the other one of the two terminals of the inverter 210 and the neutral point, based on the off-grid state of the power supply system 10, may turn on at least one switch pair among a plurality of switches included in the voltage balancer 220 based on the first voltage, may control the duty ratio of each of driving switches that are not turned on among the plurality of switches based on a result of comparing the second voltage with the third voltage, and may drive each of the driving switches based on the controlled duty ratio.

In another example, the processor may turn on a first switch pair based on the first voltage is positive.

In another example, the processor may control the duty ratio of a second switch to be equal to the duty ratio of a third switch based on the absolute value of the second voltage is equal to the absolute value of the third voltage.

In another example, the processor may control the duty ratio of the second switch to be greater than the duty ratio of the third switch based on the absolute value of the second voltage is greater than the absolute value of the third voltage and may control the duty ratio of the second switch to be less than the duty ratio of the third switch based on the absolute value of the second voltage is less than the absolute value of the third voltage.

In another example, the processor may turn on a second switch pair based on the first voltage is negative.

In another example, the processor may control the duty ratio of the first switch to be equal to duty ratio of a fourth switch based on the absolute value of the second voltage is equal to the absolute value of the third voltage.

In another example, the processor may control the duty ratio of the first switch to be greater than the duty ratio of the fourth switch based on the absolute value of the second voltage is greater than the absolute value of the third voltage and may control the duty ratio of the first switch to be less than the duty ratio of the fourth switch based on the absolute value of the second voltage is less than the absolute value of the third voltage.

In another example, the processor may perform an operation of updating the first voltage, the second voltage, and the third voltage based on the driving of each driving switch and turning on a switch pair based on the updated first voltage, the updated second voltage, and the updated third voltage and an operation of controlling a duty ratio.

The processor may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

In some embodiments, the voltage balancer 220 may be driven by a device that drives the voltage balancer 220. At this time, the device driving the voltage balancer 220 may include a processor.

Various operations of the voltage balancer 220 that may be performed by the processor and the terms, such the first voltage, the second voltage, and the third voltage, are described in detail below with reference to FIGS. 3 to 7.

FIG. 3 is a flowchart of a method of driving a voltage balancer, according to an embodiment.

In an embodiment, the voltage balancer 220 may include a plurality of inductors. At this time, the voltage balancer 220 may correspond to the voltage balancer 220 described above with reference to FIG. 2. According to the present disclosure, the voltage balancer 220 may include a plurality of inductors, thereby reducing the magnitude of current that may flow through each inductor during a voltage balancing process. Accordingly, loss that may occur in the inductor may be reduced.

As described above with reference to FIG. 2, voltage balancing may mean that the voltage balancer 220 makes power of each terminal of the inverter 210 even by using an internal circuit.

According to an embodiment, the voltage balancer 220 may perform voltage balancing in connection with the inverter 210. At this time, the inverter 210 may correspond to a split phase inverter. The split phase inverter may refer to the inverter 210 that divides a 240-V output voltage into two 120-V output voltages.

In an embodiment, the voltage balancer 220 may include a plurality of switches (e.g., S1, S2, S3, and S4). At this time, the switches (S1, S2, S3, and S4) may be divided into switch pairs.

In an embodiment, the switch pairs may include a first switch pair including a first switch S1 and a fourth switch S4 among the plurality of switches and a second switch pair including a second switch S2 and a third switch S3 among the plurality of switches. In an embodiment, the first switch S1, the second switch S2, the third switch S3, and the fourth switch S4 may be connected in parallel with each other.

According to an embodiment, the specific connection relationship of elements included in the internal circuit of the voltage balancer 220 will become clear with reference to FIG. 5.

In summary, according to the present disclosure, the voltage balancer 220 may include a plurality of inductors and a plurality of switches. The internal circuit included in the voltage balancer 220 according to an embodiment is described below in detail with reference to FIG. 5.

A processor may sense a first voltage between two terminals of the inverter 210, a second voltage between one of the two terminals of the inverter 210 and a neutral point located between the two terminals of the inverter 210, and a third voltage between the other one of the two terminals of the inverter 210 and the neutral point when the power supply system 10 is in the off-grid state in operation 310.

The fact that the power supply system 10 is in the off-grid state may mean that the power supply system 10 is the off-grid system 200 that is not connected to the grid 16.

According to an embodiment, the first voltage may correspond to a voltage between the two terminals of the inverter 210. For example, the first voltage may correspond to a value obtained by subtracting the voltage of one of the two terminals of the inverter 210 from the voltage of the other terminal. Referring to FIG. 2, the voltages of the terminals of the inverter 210 are respectively shown as Vₗᵢᵥₑ₁ and Vₗᵢᵥₑ₂. At this time, the first voltage may correspond to a value obtained by subtracting Vₗᵢᵥₑ₂ from Vₗᵢᵥₑ₁.

According to an embodiment, the second voltage may correspond to a voltage between one of the two terminals of the inverter 210 and a neutral point 510 between the two terminals of the inverter 210. At this time, the neutral point 510 may refer to a reference point with respect to which the voltages of the two terminals of the inverter 210 are symmetrical. Referring to FIG. 5, the second voltage is shown as V_{L1N}.

According to an embodiment, the third voltage may correspond to a voltage between the other one of the two terminals of the inverter 210 and the neutral point 510 between the two terminals of the inverter 210. Referring to FIG. 5, the third voltage is shown as V_{L2N}.

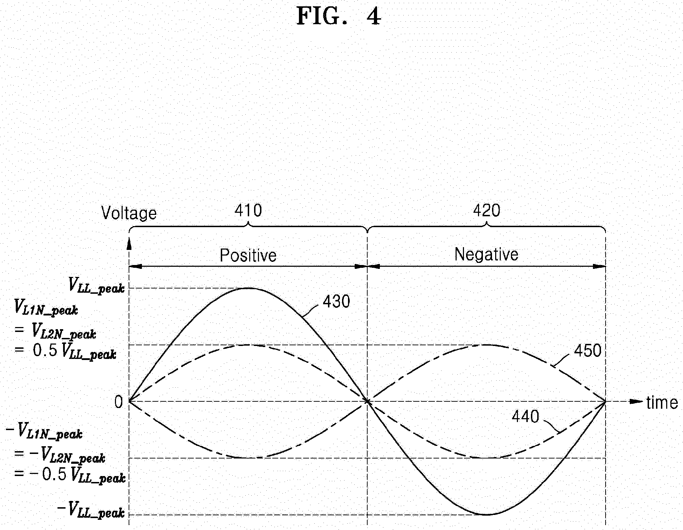

The first to third voltages are described in detail below with reference to FIG. 4.

The processor may turn on at least one switch pair among the plurality of switches (S1, S2, S3, and S4) of the voltage balancer 220 based on the first voltage in operation 320.

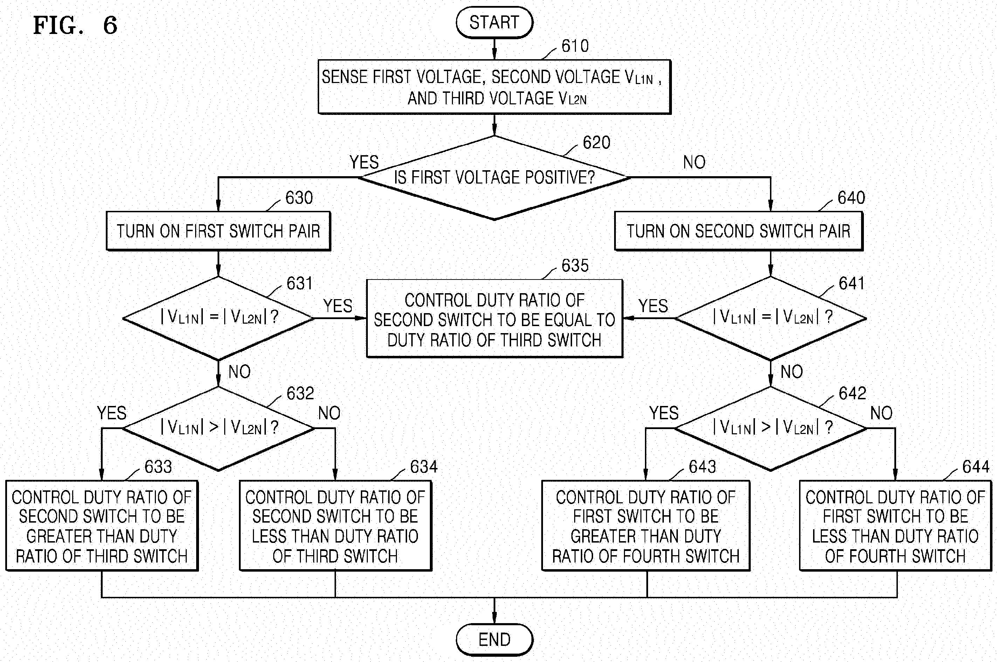

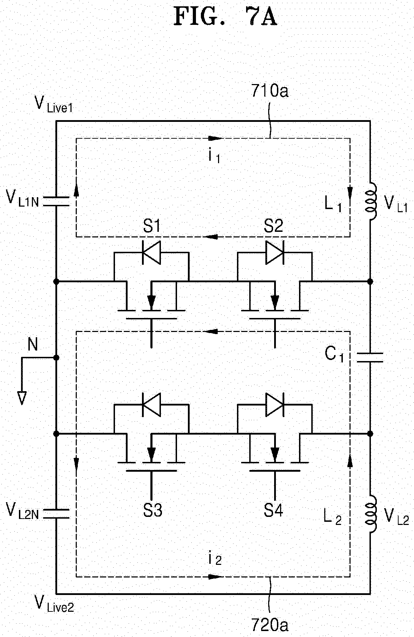

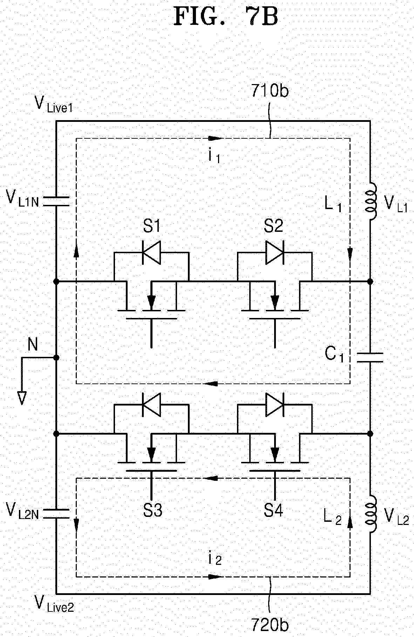

In an embodiment, the processor may turn on a first switch pair when the first voltage is positive. This may be to allow the processor to perform voltage balancing when the first voltage is positive. A method of performing, by the processor, voltage balancing when the first voltage is positive, according to an embodiment, is described in detail below with reference to FIGS. 6 and 7.

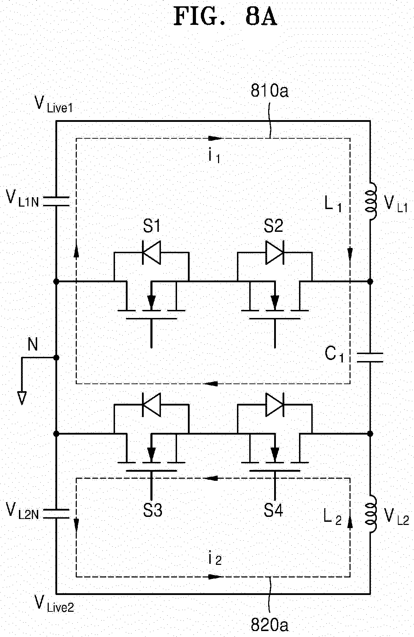

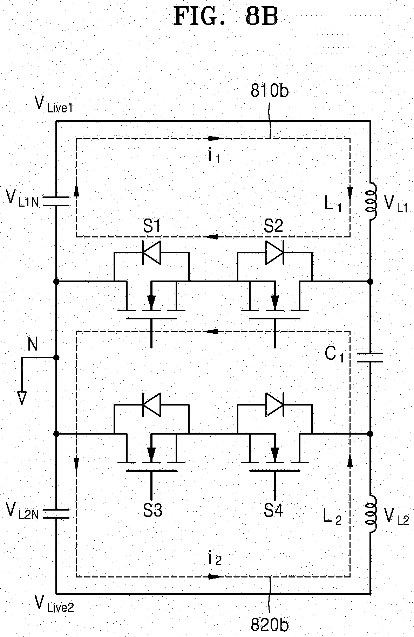

In an embodiment, the processor may turn on a second switch pair when the first voltage is negative. This may be for the processor according to an embodiment to perform voltage balancing when the first voltage is negative. A method of performing, by the processor, voltage balancing when the first voltage is negative, according to an embodiment, is described in detail below with reference to FIGS. 6 and 8.

The processor may control the duty ratio of each of driving switches, which have not been turned on among the plurality of switches, based on a result of comparing the second voltage with the third voltage in operation 330.

A duty radio may refer to the percentage of time during which a switch is on in a single switching cycle. A switching cycle may refer to the time during which a switching element is turned on and off once. The driving switches may refer to switches that are not turned on in operation 320. According to an embodiment, the processor may perform voltage balancing by controlling the duty ratio of each driving switch based on the second voltage and the third voltage.

In an embodiment, the processor may control the duty ratios of the second switch S2 and the third switch S3 to be the same as each other when the absolute value of the second voltage is the same as the absolute value of the third voltage.

In an embodiment, the processor may control the duty ratio of the second switch S2 to be greater than the duty ratio of the third switch S3 when the absolute value of the second voltage is greater than the absolute value of the third voltage and may control the duty ratio of the second switch S2 to be less than the duty ratio of the third switch S3 when the absolute value of the second voltage is less than the absolute value of the third voltage.

In an embodiment, the processor may control the duty ratios of the first switch S1 and the fourth switch S4 to be the same as each other when the absolute value of the second voltage is the same as the absolute value of the third voltage.

In an embodiment, the processor may control the duty ratio of the first switch S1 to be greater than the duty ratio of the fourth switch S4 when the absolute value of the second voltage is greater than the absolute value of the third voltage and may control the duty ratio of the first switch S1 to be less than the duty ratio of the fourth switch S4 when the absolute value of the second voltage is less than the absolute value of the third voltage.

A method of controlling, by the processor, the duty ratio of each of the driving switches based on a result of comparing the absolute value of the second voltage with the absolute value of the third voltage, according to an embodiment, is described below with reference to FIGS. 6 to 8B.

The processor may drive each of the drive switches based on the controlled duty ratio in operation 340. Through operation 340, the processor may achieve voltage balance, according to an embodiment. At this time, the voltage balance may refer to a state in which a difference in power supplied from each terminal of the inverter 210 is minimized.

According to the present disclosure, because the voltage balancer 220 includes a plurality of inductors in the internal circuit of the voltage balancer 220, inductor loss that may occur during a process in which the processor performs voltage balancing may be reduced.

For example, in the process of performing, by the processor, voltage balancing, inductor loss may be reduced by distributing a current that may flow in an inductor to a plurality of inductors included in the voltage balancer 220. Referring to FIGS. 7A, 7B, 8A and 8B, currents (e.g., 710a, 720a, 710b, 720b, 810a, 820a, 810b, and 820b), which may flow in an inductor during a process in which a processor performs voltage balancing according to an embodiment, are illustrated.

The internal circuit of the voltage balancer 220 including a plurality of inductors is described in detail below with reference to FIG. 5.

In an embodiment, the processor may perform an operation of updating the first voltage, the second voltage, and the third voltage based on the driving of each driving switch and turning on a switch pair based on the updated first voltage, the updated second voltage, and the updated third voltage and an operation (not shown) of controlling a duty ratio. Through this, the processor may continuously perform voltage balancing, according to an embodiment.

A method of performing, by a processor, voltage balancing according to an embodiment is described in detail below with reference to FIGS. 6 to 8B.

FIG. 4 is a diagram illustrating a first voltage, a second voltage, and a third voltage that may be sensed by a voltage balancer, according to an embodiment.

FIG. 4 illustrates changes in a first voltage 430, a second voltage 440, and a third voltage 450 over time.

As described above with reference to operation 310 in FIG. 3, the processor may sense the first voltage 430 between two terminals of the inverter 210, the second voltage 440 between one of the two terminals of the inverter 210 and the neutral point 510 between the two terminals of the inverter 210, and the third voltage 450 between the other one of the two terminals of the inverter 210 and the neutral point 510 when the power supply system 10 is in the off-grid state.

At this time, the inverter 210 may correspond to the inverter 210 described above with reference to FIG. 2.

The first voltage 430 may correspond to a voltage between the two terminals of the inverter 210. For example, the first voltage 430 may correspond to a value obtained by subtracting the voltage of one of the two terminals of the inverter 210 from the voltage of the other terminal. This may correspond to a voltage between Vₗᵢᵥₑ₁ and Vₗᵢᵥₑ₂, which are respectively the voltages of the two terminals of the inverter 210 in FIG. 2. For example, the first voltage may correspond to a value obtained by subtracting Vₗᵢᵥₑ₂ from Vₗᵢᵥₑ₁.

The voltages of the terminals of the inverter 210 may have a phase difference from each other. For example, the voltage of one of two terminals of the inverter 210 and the voltage of the other terminal may have a phase difference of 180 degrees. Due to this, as illustrated in FIG. 4, at a specific time, the second voltage 440 and the third voltage 450 may be positive and negative or negative and positive, respectively.

As described above with reference to FIG. 3, the second voltage 440 may correspond to a voltage between one of the two terminals of the inverter 210 and the neutral point 510 between the two terminals of the inverter 210. Similarly, as described above with reference to FIG. 3, the third voltage 450 may correspond to a voltage between the other of the two terminals of the inverter 210 and the neutral point 510 between the two terminals of the inverter 210. The neutral point 510 may be a reference point with respect to which the voltages of two terminals of the inverter 210 are symmetrical.

The second voltage 440 and the third voltage 450 may be used by the processor to control the duty ratios of driving switches, according to an embodiment. In an embodiment, the processor may control the duty ratios of driving switches based on a result of comparing the absolute value of the second voltage 440 with the absolute value of the third voltage 450. At this time, the processor may resolve the voltage imbalance of each terminal of the inverter 210 by performing voltage balancing based on the controlled duty ratios and moving power.

FIG. 4 illustrates a region 410 in which the first voltage 430 is positive and a region 420 in which the first voltage 430 is negative.

When the first voltage 430 is positive, this may mean that the second voltage 440 is positive and the third voltage 450 is negative. At this time, a value obtained by subtracting the negative third voltage 450 from the positive second voltage 440 may be positive so that the first voltage 430 may be positive.

In some embodiments, when the first voltage 430 is negative, this may mean that the second voltage 440 is negative and the third voltage 450 is positive. At this time, a value obtained by subtracting the positive third voltage 450 from the negative second voltage 440 may be positive so that the first voltage 430 may be positive.

FIG. 5 is a diagram showing an internal circuit of a voltage balancer, according to an embodiment.

Referring to FIG. 5, the internal circuit of the voltage balancer 220 including a plurality of capacitors, a plurality of switches, and a plurality of inductors is illustrated.

In an embodiment, the voltage balancer 220 may include a plurality of switches (e.g., S1, S2, S3, and S4). At this time, the switches (S1, S2, S3, and S4) may be grouped into a plurality of switch pairs.

In an embodiment, the switch pairs may include a first switch pair including the first switch S1 and the fourth switch S4 among the plurality of switches and a second switch pair including the second switch S2 and the third switch S3 among the plurality of switches, wherein the first switch S1 and the second switch S2 may be respectively connected in parallel with the third switch S3 and the fourth switch S4.

Referring to FIG. 5, the plurality of switches (S1, S2, S3, and S4) included in the internal circuit of the voltage balancer 220 are illustrated according to an embodiment. At this time, the first switch S1 and the second switch S2 may be connected in series with each other.

The third switch S3 and the fourth switch S4 may be connected in series with each other. As described above, the first switch S1 and the second switch S2 may be respectively connected in parallel with the third switch S3 and the fourth switch S4.

According to an embodiment, a processor may perform voltage balancing by turning on a switch based on the first to third voltages.

In an embodiment, each of the switches (S1, S2, S3, and S4) may correspond to a power semiconductor switch. A power semiconductor switch may be a switchable semiconductor device that may be used to control the flow of power.

In an embodiment, the internal circuit of the voltage balancer 220 may include a plurality of inductors (e.g., L₁ and L₂). Due to this, current flowing through each of the inductor (L₁ or L₂) while the processor is performing voltage balancing may be distributed to the inductors (L₁ and L₂), thereby reducing loss occurring in the inductor (L₁ or L₂).

For example, the internal circuit of the voltage balancer 220 may include a first inductor L₁ and a second inductor L₂. Accordingly, when the processor performs voltage balancing, current flowing through each of the inductors (L₁ and L₂) may branch so that half of the total current may flow to the first inductor L₁ or the second inductor L₂.

Power loss that may occur in a particular element may correspond to the product of a resistance and the square of a current. Therefore, when the voltage balancer 220 according to an embodiment is used, a current corresponding to half of the total current may be applied to each of the first inductor L₁ and the second inductor L₂ so that loss occurring in each of the inductors (L₁ and L₂) may be reduced to a quarter.

According to the present disclosure, the processor may perform voltage balancing through the internal circuit of the voltage balancer 220 including the inductors (L₁ and L₂), as illustrated in FIG. 5, thereby achieving parallel operation of the inductors (L₁ and L₂) and reducing loss in the inductors (L₁ and L₂). In an embodiment, a capacitor (C₁) may be connected between the inductors (L1 and L2).

FIG. 6 is a diagram illustrating a method of performing, by a voltage balancer, voltage balancing, according to an embodiment.

A processor may sense a first voltage, a second voltage, and a third voltage in operation 610. The first to third voltages have been described above with reference to FIGS. 3 and 4, and thus, descriptions thereof will be omitted.

In an embodiment, the processor may turn on at least one switch pair among a plurality of switches included in the voltage balancer 220 based on the first voltage.

The processor may determine whether the first voltage is positive in operation 620. When the first voltage is positive, this may mean that the second voltage is positive and the third voltage is negative, as described above with reference to FIG. 4. Similarly, when the first voltage is negative, this may mean that the second voltage is negative and the third voltage is positive, as described above with reference to FIG. 4.

At this time, the processor may perform operation 630 when the first voltage is positive and may perform operation 640 when the first voltage is not positive. Accordingly, different switch pairs may be turned on according to whether the first voltage is positive or not. Therefore, the operation of the voltage balancer 220 when the first voltage is positive may be different from the operation of the voltage balancer 220 when the first voltage is negative.

FIGS. 7A and 7B illustrate that a processor performs voltage balancing when the first voltage is positive, according to an embodiment. FIGS. 8A and 8B illustrate that a processor performs voltage balancing when the first voltage is negative, according to an embodiment.

An operating method of a processor when the first voltage sensed by the processor is positive is described below.

The processor may turn on a first switch pair in operation 630. In an embodiment, the processor may turn on the first switch pair when the first voltage is positive. At this time, the first switch pair may include the first switch S1 and the fourth switch S4.

In an embodiment, the processor may control the duty ratio of each of driving switches that are not turned on among a plurality of switches, based on a result of comparing the second voltage with the third voltage. A method of controlling, by the processor, the duty ratio of each of the driving switches is described in detail below with reference to operations 631 to 635.

The processor may determine whether the absolute value of the second voltage and the absolute value of the third voltage are equal in operation 631. At this time, the processor may perform operation 635 when the absolute value of the second voltage and the absolute value of the third voltage are equal.

The processor may control the duty ratio of the second switch S2 to be equal to the duty ratio of the third switch S3 when the absolute value of the second voltage is equal to the absolute value of the third voltage in operation 635. For example, the processor may control the duty ratios of the second switch S2 and the third switch S3 to be 0.5 when the absolute value of the second voltage is equal to the absolute value of the third voltage.

At this time, the duty ratio of each driving switch may be controlled based on power loss. For example, the duty ratios of driving switches may be controlled to be 0.495 and 0.505, respectively, to compensate for power loss. For example, the duty ratio of each drive switch may be continuously controlled based on power loss. Similarly, in subsequent operations, the duty ratio of each driving switch may be controlled based on power loss.

This may mean that the time during which the first switch S1, the fourth switch S4, and the second switch S2 are turned on is equal to the time during which the first switch S1, the fourth switch S4, and the third switch S3 are turned on within one switching cycle.

FIGS. 7A and 7B are diagrams illustrating a method of performing, by a voltage balancer, voltage balancing when the first voltage is positive, according to an embodiment. In detail, FIG. 7A illustrates that the first switch S1, the fourth switch S4, and the second switch S2 are turned on when the first voltage is positive, and FIG. 7B illustrates that the first switch S1, the fourth switch S4, and the third switch S3 are turned on when the first voltage is positive.

In an embodiment, when the processor performs operation 635 so that the duty ratios of the second switch S2 and the third switch S3 are controlled to be equal, the time during which the processor operates as shown in FIG. 7A and the time during which the processor operates as shown in FIG. 7B may be equal within one cycle. Through this, voltage balance may be maintained.

Otherwise, when the absolute value of the second voltage is not equal to the absolute value of the third voltage, the processor may perform operation 632.

The processor may determine whether the absolute value of the second voltage is greater than the absolute value of the third voltage in operation 632.

In an embodiment, the processor may control the duty ratio of the second switch S2 to be greater than the duty ratio of the third switch S3 when the absolute value of the second voltage is greater than the absolute value of the third voltage and may control the duty ratio of the second switch S2 to be less than the duty ratio of the third switch S3 when the absolute value of the second voltage is less than the absolute value of the third voltage.

For example, the processor may perform operation 633 when the absolute value of the second voltage is greater than the absolute value of the third voltage. In another example, the processor may perform operation 634 when the absolute value of the second voltage is less than the absolute value of the third voltage.

The processor may control the duty ratio of the second switch S2 to be greater than the duty ratio of the third switch S3 in operation 633.

This may mean that within one switching cycle, the time during which the first switch S1, the fourth switch S4, and the second switch S2 are turned on is longer than the time during which the first switch S1, the fourth switch S4, and the third switch S3 are turned on. At this time, the time during which the processor operates as shown in FIG. 7A may be longer than the time during which the processor operates as shown in FIG. 7B within one cycle. Through this, voltage balance may be achieved.

The processor may control the duty ratio of the second switch S2 to be less than the duty ratio of the third switch S3 in operation 634.

This may mean that within one switching cycle, the time during which the first switch S1, the fourth switch S4, and the second switch S2 are turned on is shorter than the time during which the first switch S1, the fourth switch S4, and the third switch S3 are turned on. At this time, within one cycle, the time during which the processor operates as shown in FIG. 7A may be shorter than the time during which the processor operates as shown in FIG. 7B. Through this, voltage balance may be achieved.

In an embodiment, the processor may drive each drive switch based on a duty ratio. The method of driving, by a processor, each driving switch based on a controlled duty ratio has been described above with reference to operations 631 to 635, and thus, detailed descriptions thereof are omitted.

An operating method of the processor when the first voltage sensed by the processor is negative is described below.

The processor may turn on a second switch pair in operation 640. In an embodiment, the processor may turn on the second switch pair when the first voltage is negative. At this time, the second switch pair may include the second switch S2 and the third switch S3.

As described above with reference to operation 630, according to an embodiment, the processor may control the duty ratio of each driving switch that is not turned on among the plurality of switches, based on the result of comparing the second voltage with the third voltage. A method of controlling, by the processor, the duty ratio of each driving switch based on the result of comparing the second voltage with the third voltage is described below with reference to operation 635 and operations 641 to 644.

The processor may determine whether the absolute value of the second voltage and the absolute value of the third voltage are equal in operation 641. In an embodiment, the processor may control the duty ratio of the first switch S1 to be equal to the duty ratio of the fourth switch S4 when the absolute value of the second voltage is equal to the absolute value of the third voltage. For example, the processor may perform operation 635 when the absolute value of the second voltage is equal to the absolute value of the third voltage.

The processor may control the duty ratio of the first switch S1 to be equal to the duty ratio of the fourth switch S4 when the absolute value of the second voltage is equal to the absolute value of the third voltage in operation 635. For example, the processor may control the duty ratios of the first switch S1 and the fourth switch S4 to be 0.5 when the absolute value of the second voltage is equal to the absolute value of the third voltage.

This may mean that within one switching cycle, the time during which the second switch S2, the third switch S3, and the first switch S1 are turned on is equal to the time during which the second switch S2, the third switch S3, and the fourth switch S4 are turned on. Through this, voltage balance may be maintained.

FIGS. 8A and 8B illustrate that the processor performs voltage balancing when the first voltage is negative.

In detail, FIG. 8A illustrates that the second switch S2, the third switch S3, and the fourth switch S4 are turned on when the first voltage is negative, and FIG. 8B illustrates that the second switch S2, the third switch S3, and the first switch S1 are turned on when the first voltage is negative.

In an embodiment, when the processor performs operation 635 so that the duty ratios of the second switch S2 and the third switch S3 are controlled to be equal, the time during which the processor operates as shown in FIG. 8A and the time during which the processor operates as shown in FIG. 8B may be equal within one cycle. Through this, the voltage of each terminal of the inverter 210 may be maintained to be even.

Otherwise, when the absolute value of the second voltage is not equal to the absolute value of the third voltage, the processor may perform operation 642.

The processor may determine whether the absolute value of the second voltage is greater than the absolute value of the third voltage in operation 642.

In an embodiment, the processor may control the duty ratio of the first switch S1 to be greater than the duty ratio of the fourth switch S4 when the absolute value of the second voltage is greater than the absolute value of the third voltage and may control the duty ratio of the first switch S1 to be less than the duty ratio of the fourth switch S4 when the absolute value of the second voltage is less than the absolute value of the third voltage.

For example, the processor may perform operation 643 when the absolute value of the second voltage is greater than the absolute value of the third voltage. In another example, the processor may perform operation 644 when the absolute value of the second voltage is less than the absolute value of the third voltage.

The processor may control the duty ratio of the first switch S1 to be greater than the duty ratio of the fourth switch S4 in operation 643.

This may mean that within one switching cycle, the time during which the second switch S2, the third switch S3, and the first switch S1 are turned on is longer than the time during which the second switch S2, the third switch S3, and the fourth switch S4 are turned on. At this time, the time during which the processor operates as shown in FIG. 8B may be longer than the time during which the processor operates as shown in FIG. 8A within one cycle. Through this, voltage balance may be achieved.

The processor may control the duty ratio of the first switch S1 to be less than the duty ratio of the fourth switch S4 in operation 644.

This may mean that within one switching cycle, the time during which the second switch S2, the third switch S3, and the first switch S1 are turned on is shorter than the time during which the second switch S2, the third switch S3, and the fourth switch S4 are turned on. At this time, the time during which the processor operates as shown in FIG. 8B may be shorter than the time during which the processor operates as shown in FIG. 8A within one cycle. Through this, voltage balance may be achieved.

In an embodiment, the processor may perform an operation (not shown) of updating the first voltage, the second voltage, and the third voltage based on the driving of each driving switch and turning on a switch pair and an operation (not shown) of controlling a duty ratio based on the updated first voltage, the updated second voltage, and the updated third voltage.

For example, the processor may repeatedly perform the operations illustrated in FIG. 6, based on the updated first to third voltages to continuously achieve voltage balance.

FIGS. 7A and 7B are diagrams illustrating a method of performing, by a voltage balancer, voltage balancing when the first voltage is positive, according to an embodiment.

Referring to FIG. 7A, it is illustrated that the first switch S1, the fourth switch S4, and the second switch S2 are turned on when the first voltage is positive. It is illustrated in FIG. 7B that the first switch S1, the fourth switch S4, and the third switch S3 are turned on when the first voltage is positive. According to an embodiment, when the first voltage is positive, a processor may perform voltage balancing by operating as shown in FIG. 7A or 7B, based on a controlled duty ratio.

As described above with reference to FIG. 6, when the first voltage is positive and the absolute value of the second voltage is greater than the absolute value of the third voltage, the time during which the processor operates as shown in FIG. 7A may be longer than the time during which the processor operates as shown in FIG. 7B within one cycle.

Similarly, when the first voltage is positive and the absolute value of the second voltage is less than the absolute value of the third voltage, the time during which the processor operates as shown in FIG. 7A may be shorter than the time during which the processor operates as shown in FIG. 7B within one cycle.

FIGS. 8A and 8B are diagrams illustrating a method of performing, by a voltage balancer, voltage balancing when the first voltage is negative, according to an embodiment.

Referring to FIG. 8A, it is illustrated that the second switch S2, the third switch S3, and the fourth switch S4 are turned on when the first voltage is negative. It is illustrated in FIG. 8B that the second switch S2, the third switch S3, and the first switch S1 are turned on when the first voltage is negative. According to an embodiment, when the first voltage is negative, a processor may perform voltage balancing by operating as shown in FIG. 8A or 8B, based on a controlled duty ratio.

As described above with reference to FIG. 6, when the first voltage is negative and the absolute value of the second voltage is greater than the absolute value of the third voltage, the time during which the processor operates as shown in FIG. 8B may be longer than the time during which the processor operates as shown in FIG. 8A within one cycle.

Similarly, when the first voltage is negative and the absolute value of the second voltage is less than the absolute value of the third voltage, the time during which the processor operates as shown in FIG. 8B may be shorter than the time during which the processor operates as shown in FIG. 8A within one cycle.

As illustrated in FIGS. 7A and 7B and FIGS. 8A and 8B, in a process in which a processor according to an embodiment performs voltage balancing, a current flowing in an inductor may be split into a first current 710a, 710b, 810a, or 810b and a second current 720a, 720b, 820a, or 820b. At this time, the first current 710a, 710b, 810a, or 810b may refer to a current flowing in the first inductor L₁. The second current 720a, 720b, 820a, or 820b may refer to a current flowing in the second inductor L₂. The sum of the first current 710a, 710b, 810a, or 810b) and the second current 720a, 720b, 820a, or 820b may be equal to a current that may flow in an inductor during a process in which the processor performs voltage balancing according to an embodiment.

Referring to FIGS. 7A and 7B, it is illustrated that the first current 710a or 710b flows in the first inductor L₁, and the second current 720a or 720b flows in the second inductor L₂. Referring to FIGS. 8A and 8B, it is illustrated that the first current 810a or 810b flows in the first inductor L₁, and the second current 820a or 820b flows in the second inductor L₂.

As described above, according to the present disclosure, a processor may perform voltage balancing through the internal circuit of the voltage balancer 220 including a plurality of inductors (L₁ and L₂), thereby achieving parallel operation of the inductors (L₁ and L₂) and reducing loss that may occur in each of the inductors (L₁ and L₂).

According to the problem solving means of the present disclosure described above, a voltage balancer including a plurality of inductors and a method of driving the voltage balancer may be provided so that loss in the inductors included in the voltage balancer and in the method of driving the voltage balancer may be reduced.

The embodiments of the present disclosure described above may be embodied as a computer program that may be executed on a computer using various components. The computer program may be recorded in a computer-readable medium.

At this time, the computer-readable medium may include a magnetic medium such as a hard disk, a floppy disks, or magnetic tape, an optical recording medium such as compact disc read-only memory (CD-ROM) or digital versatile disk (DVD), a magneto-optical medium such as a floptical disk, or a hardware device, such as ROM, random access memory (RAM), or flash memory, which is specifically configured to store and execute program instructions.

The computer program may be specially designed and configured for the present disclosure or may have been known and available to those skilled in the art in the field of computer software. Examples of computer programs may include machine codes created by a compiler and high-level language codes that may be executed on a computer using an interpreter.

The particular implementations described herein are illustrative examples of embodiments and are not intended to otherwise limit the scope of the embodiments in any way. For the sake of brevity, conventional electronic components, control systems, software development, and other functional aspects of the systems may be described in detail. Also, connection lines or connection members between the components illustrated in the drawings are merely illustrative of functional connections and/or physical or circuit connections. In actual devices, connections between the components may be represented by functional connections, physical connections, or circuit connections that may be replaced or added. Moreover, no component is essential to the practice of the present disclosure unless the component is specifically described as "essential" or "critical."

The use of the terms "a", and "an" and "the" and similar referents in the context describing embodiments (especially in the context of the following claims) are to be construed to cover both the singular and the plural. Furthermore, recitation of ranges of values herein are merely intended to serve as a shorthand method of referring individual to each separate value falling within the range, unless otherwise indicated herein, and each separate value is incorporated into the specification as if it were individually recited herein.

The operations of all methods described herein can be performed in any suitable order unless indicated otherwise herein or otherwise clearly contradicted by context. The present invention is not necessarily limited to the described order of the operations. The use of any or all examples or language (e.g., "such as") provided herein is intended merely to elaborate the present disclosure and does not pose a limitation on the scope of the present disclosure unless otherwise claimed. Numerous modifications and adaptations will be readily apparent to one of ordinary skill in the art without departing from the spirit and scope of the appended claims or their equivalents.

Therefore, the spirit of the present invention should not be limited to the embodiments described above, and the scope of the appended claims and the scope of equivalents of the claims or the equivalently modified scope are all included in the spirit of the present invention.

## Claims

1. A method of driving a voltage balancer, the method comprising:
sensing a first voltage between two terminals of an inverter, a second voltage between one of the two terminals of the inverter and a neutral point located between the two terminals of the inverter, and a third voltage between the other of the two terminals of the inverter and the neutral point, based on a power supply system is in an off-grid state;
turning on at least one switch pair among a plurality of switches included in the voltage balancer based on the first voltage;
controlling a duty ratio of each driving switch that is not turned on among the plurality of switches, based on a result of comparing the second voltage with the third voltage; and
driving each driving switch based on the controlled duty ratio.

2. The method of claim 1, wherein
the at least one switch pair includes a first switch pair including a first switch and a fourth switch among the plurality of switches and a second switch pair including a second switch and a third switch among the plurality of switches, and
the first switch and the second switch are respectively connected in parallel with the third switch and the fourth switch.

3. The method of claim 2, wherein
the turning on of the at least one switch pair includes turning on the first switch pair based on the first voltage is positive.

4. The method of claim 3, wherein
the controlling of the duty ratio includes:
controlling the duty ratio of the second switch to be equal to the duty ratio of the third switch based on an absolute value of the second voltage is equal to an absolute value of the third voltage;
controlling the duty ratio of the second switch to be greater than the duty ratio of the third switch when based on an absolute value of the second voltage is greater than an absolute value of the third voltage; and
controlling the duty ratio of the second switch to be less than the duty ratio of the third switch based on the absolute value of the second voltage is less than the absolute value of the third voltage.

5. The method of claim 2, wherein
the turning on of the at least one switch pair includes
turning on the second switch pair based on the first voltage is negative.

6. The method of claim 5, wherein
the controlling of the duty ratio includes:
controlling the duty ratio of the first switch to be equal to the duty ratio of the fourth switch based on an absolute value of the second voltage is equal to an absolute value of the third voltage;
controlling the duty ratio of the first switch to be greater than the duty ratio of the fourth switch based on an absolute value of the second voltage is greater than an absolute value of the third voltage; and
controlling the duty ratio of the first switch to be less than the duty ratio of the fourth switch based on the absolute value of the second voltage is less than the absolute value of the third voltage.

7. The method of claim 1, further comprising
updating the first voltage, the second voltage, and the third voltage based on the driving of each driving switch; and
performing the turning on of the at least one switch pair based on the updated first voltage, the updated second voltage, and the updated third voltage and the controlling of the duty ratio.

8. A computer-readable recording medium having recorded thereon a program for causing a computer to execute the method of claim 1.

9. A voltage balancer comprising a processor configured to:
sense a first voltage between two terminals of an inverter, a second voltage between one of the two terminals of the inverter and a neutral point located between the two terminals of the inverter, and a third voltage between the other of the two terminals of the inverter and the neutral point, based on a power supply system is in an off-grid state;
turn on at least one switch pair among a plurality of switches included in the voltage balancer based on the first voltage;
control a duty ratio of each driving switch that is not turned on among the plurality of switches, based on a result of comparing the second voltage with the third voltage; and
drive each driving switch based on the controlled duty ratio.

10. The voltage balancer of claim 9, wherein
the at least one switch pair includes a first switch pair including a first switch and a fourth switch among the plurality of switches and a second switch pair including a second switch and a third switch among the plurality of switches, and
the first switch and the second switch are respectively connected in parallel with the third switch and the fourth switch.

11. The voltage balancer of claim 10, wherein
the processor is further configured to turn on the first switch pair based on the first voltage is positive.

12. The voltage balancer of claim 11, wherein
the processor is further configured to
control the duty ratio of the second switch to be equal to the duty ratio of the third switch based on an absolute value of the second voltage is equal to an absolute value of the third voltage;
control the duty ratio of the second switch to be greater than the duty ratio of the third switch when based on an absolute value of the second voltage is greater than an absolute value of the third voltage; and
control the duty ratio of the second switch to be less than the duty ratio of the third switch based on the absolute value of the second voltage is less than the absolute value of the third voltage.

13. The voltage balancer of claim 10, wherein
the processor is further configured to turn on the second switch pair based on the first voltage is negative.

14. The voltage balancer of claim 13, wherein
the processor is further configured to
control the duty ratio of the first switch to be equal to the duty ratio of the fourth switch based on an absolute value of the second voltage is equal to an absolute value of the third voltage;
control the duty ratio of the first switch to be greater than the duty ratio of the fourth switch based on an absolute value of the second voltage is greater than an absolute value of the third voltage; and
control the duty ratio of the first switch to be less than the duty ratio of the fourth switch based on the absolute value of the second voltage is less than the absolute value of the third voltage.

15. The voltage balancer of claim 9, wherein
the processor is further configured to
update the first voltage, the second voltage, and the third voltage based on the driving of each driving switch; and
turn on the at least one switch pair based on the updated first voltage, the updated second voltage, and the updated third voltage and control the duty ratio.
